# EUROPÄISCHE PATENTSCHRIFT

(11) **EP 4 173 867 B1**
(45) Veröffentlichungstag und Bekanntmachung des Hinweises auf die Patenterteilung: **23.10.2024**
(21) Anmeldenummer: 22213751.5
(22) Anmeldetag: 06.11.2019
(51) Int. Cl.: B60K 17/356, B60K 17/36, B60K 7/00, B60K 17/10, B60K 1/04, B60K 23/04, B60K 23/08, B60K 6/00, B60K 6/12, B60K 6/46, B60K 6/52

(54) **ELEKTROHYDRAULISCHE ANTRIEBSVORRICHTUNG FÜR EIN KRAFTFAHRZEUG SOWIE KRAFTFAHRZEUG MIT EINER DERARTIGEN ANTRIEBSVORRICHTUNG**
ELECTROHYDRAULIC DRIVE DEVICE FOR A MOTOR VEHICLE AND MOTOR VEHICLE HAVING SUCH A DRIVE DEVICE
DISPOSITIF D'ENTRAÎNEMENT ÉLECTROHYDRAULIQUE POUR UN VÉHICULE AUTOMOBILE ET VÉHICULE AUTOMOBILE ÉQUIPÉ D'UN TEL DISPOSITIF D'ENTRAÎNEMENT

(30) Priorität: 12.11.2018 DE 102018128221
(43) Veröffentlichungstag der Anmeldung: 03.05.2023
(62) Teilanmeldung aus: 19207372.4
(73) Patentinhaber: MAN Truck & Bus SE, 80995 München (DE)
(72) Erfinder: Fleischhacker, Jan, 80995 München (DE); Wagner, Philipp, 80995 München (DE)
(74) Vertreter: v. Bezold & Partner Patentanwälte - PartG mbB

(56) Entgegenhaltungen:
- EP-A1- 3 406 474
- WO-A1-01/83251
- US-A- 4 133 403
- US-A- 4 570 741

## Beschreibung

Die Erfindung betrifft eine elektrohydraulische Antriebsvorrichtung für ein Kraftfahrzeug sowie ein Kraftfahrzeug, vorzugsweise Nutzfahrzeug, mit einer derartigen elektrohydraulischen Antriebsvorrichtung.

Um bei Kraftfahrzeugen flexibel auf unterschiedliche Fahrsituationen (z. B. Schlupf der Antriebsräder) zu reagieren und/oder insgesamt das Fahrverhalten bzw. die Fahrstabilität zu verbessern, sind im Stand der Technik eine Reihe von Antriebskonzepten bekannt, die ein variables Verteilen der Antriebsmomente in Längs- und Querrichtung ermöglichen. Neben der Verwendung von Verteilergetrieben zur Drehmomentaufteilung existieren auch Ansätze, einzelne Achsmodule mit zusätzlichen integrierten Antriebsvorrichtungen (z. B. in Form elektrischer Radnabenmotoren) auszustatten.

Zwar ermöglicht eine derartige Montage radnaher Elektromotoren neben der Einsparung von Bauteilen (wie Gelenkwellen, Differentialgetriebe etc.) eine flexible und damit bedarfsgerechte Steuerung des Antriebs, jedoch sind diese Konzepte im Nutzfahrzeugbereich aufgrund der dort benötigten leistungsstarken und damit entsprechend großen Auslegung der Elektromotoren oftmals nicht einfach übertragbar bzw. umsetzbar. Im Speziellen im Fall von Nutzfahrzeugen mit lenkbaren angetriebenen Achsen besteht Bedarf an Bauraum und Gewicht sparender Antriebslösungen, die eine flexible Antriebmomentsteuerung ermöglichen.

In diesem Zusammenhang ist aus der WO 01/83251 A1 eine Allradantriebshilfe für elektrische Maschinen bekannt. Die Allradantriebshilfe umfasst dabei ein elektrisches Antriebssystem für Antriebsräder auf einer nicht lenkenden Achse und ein selektiv betätigbares hydraulisches System für Antriebsräder auf einer lenkenden Achse. Ein Steuergerät steuert den Betrieb des Antriebssystems entsprechend der Auswahl des Bedieners und/oder durch Erkennung eines Schlupfes des elektrischen Antriebssystems. Auf diese Weise ist die Maschine in der Lage, bei Bedarf einen Allradantrieb zu realisieren, während sie bei nicht eingeschaltetem Allradsystem genauso effizient wie eine konventionelle vollelektrische Maschine mit Zweiradantrieb arbeitet.

Ferner offenbart die US 4,570,741 A ein zuschaltbares Mehrradantriebssystem für eine Bergbaumaschine. Das Mehrradantriebssystem umfasst einen Elektromotor, der direkt ein Rad antreibt und über einen Kupplungsmechanismus eine Hydraulikpumpe antreibt. Ein weiteres Rad ist so angeschlossen, dass es von einem Hydraulikmotor angetrieben wird, der über einen Hydraulikkreislauf angeschlossen ist und von der Hydraulikpumpe angetrieben wird. Die Hydraulikpumpe ist wahlweise mit dem Hydraulikmotor verbunden, so dass ein Rad oder beide Räder angetrieben werden können. Der Hydraulikkreislauf wird so gesteuert, dass der Hydraulikmotor in einem Zustand mit einem Radantrieb in einen Freilaufmodus versetzt wird und keine Verluste im Hydraulikkreislauf aufgrund der Verbindung mit dem Rad auftreten. Weiterhin ist aus der US 4 133 403 A eine Vorrichtung zum Antrieb eines Fahrzeugs bekannt, bei dem Elektromotoren mit den Vorderrädern eines Fahrzeugs verbunden werden, um den Vortrieb des Fahrzeugs zu starten. Zudem sind Flüssigkeitsdruckmotoren mit den Hinterrädern des Fahrzeugs verbunden, um das Fahrzeug anzutreiben, sobald die Elektromotoren mit dem Antrieb des Fahrzeugs begonnen haben. Eine Elektropumpe versorgt die Druckfluidmotoren mit expandierbarer Flüssigkeit. Elektrische Heizgeräte dehnen die Flüssigkeit in den Flüssigkeitsdruckmotoren aus, um die Flüssigkeitsdruckmotoren zu veranlassen, die Hinterräder des Fahrzeugs zu drehen und dadurch das Fahrzeug anzutreiben. Die Elektromotoren sind so ausgelegt, dass sie als Generatoren fungieren, nachdem die Flüssigkeitsdruckmotoren mit dem Antrieb des Fahrzeugs begonnen haben, um eine Batterie aufzuladen, die die Elektromotoren, die Elektropumpe und die elektrischen Heizgeräte betreibt.

Es ist daher Aufgabe der Erfindung, eine im Vergleich zum Stand der Technik verbesserte Antriebsvorrichtung für ein Kraftfahrzeug bereitzustellen. Insbesondere liegt der Erfindung die Aufgabe zugrunde, eine Antriebsvorrichtung bereitzustellen, die ein variables Verteilen der Antriebsmomente in Längs- und/oder Querrichtung ermöglicht, um dadurch flexibel auf unterschiedliche Fahrsituationen zu reagieren. Darüber hinaus soll die Antriebsvorrichtung insbesondere nicht auf den Antrieb durch einen Verbrennungsmotor angewiesen sein.

Diese Aufgaben werden durch eine elektrohydraulische Antriebsvorrichtung mit den Merkmalen des unabhängigen Anspruchs 1 und ein Kraftfahrzeug mit den Merkmalen des Anspruchs 15 gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Die erfindungsgemäße elektrohydraulische Antriebsvorrichtung für ein Kraftfahrzeug, vorzugsweise ein Nutzfahrzeug, umfasst dabei eine rein elektrisch antreibbare Achse, an der mindestens eine, vorzugsweise motorisch und generatorisch betreibbare, elektrische Maschine angeordnet ist, und eine elektrohydraulisch antreibbare Achse, an der mindestens eine hydraulische Maschine, angeordnet ist. Die beiden, z. B. als Starrachsen ausgebildeten, Achsen können in diesem Zusammenhang auch als Antriebsachsen bezeichnet werden. Ferner kann eine "Anordnung" der mindestens einen elektrischen Maschine an der rein elektrisch antreibbaren Achse und/oder eine "Anordnung" der mindestens einen hydraulischen Maschine an der hydraulisch antreibbaren Achse auch dergestalt sein, dass die mindestens eine elektrische Maschine und/oder die mindestens eine hydraulische Maschine als Radnabenmaschinen ausgebildet sind.

Weiterhin weist die elektrohydraulische Antriebsvorrichtung eine erste elektrohydraulische Antriebseinrichtung auf, die eine erste, vorzugsweise motorisch und generatorisch betreibbare, elektrische Maschine und eine erste hydraulische Maschine umfasst. Die Ordnungszahlangabe "erste" dient dabei ausschließlich der besseren Unterscheidbarkeit dieser Maschinen von den bisherigen bzw. weiteren später noch genannten elektrischen/hydraulischen Maschinen. Mit anderen Worten ist die "erste" elektrische bzw. hydraulische Maschine somit nicht mit den an den antreibbaren Achsen angeordneten Maschinen identisch. Die erste hydraulische Maschine steht ferner mit der ersten elektrischen Maschine zur Leistungsübertragung in Antriebsverbindung. Anders ausgedrückt können die erste hydraulische Maschine und die erste elektrische Maschine bewegungsgekoppelt sein. Beispielsweise kann die erste hydraulische Maschine dazu über eine Welle direkt mit der ersten elektrischen Maschine antriebsmäßig verbunden sein und/oder über eine direkte Kupplung miteinander verbunden sein. Zudem steht die erste hydraulische Maschine zur Leistungsübertragung auch mit mindestens einer, an der elektrohydraulisch antreibbaren Achse angeordneten, hydraulischen Maschine in Fluidkommunikation. Anders ausgedrückt sind die besagten hydraulischen Maschinen fluidisch gekoppelt. Dies kann beispielsweise mittels in Hydraulikleitungen geführten Flüssigkeiten (z. B. Mineralöl) und/oder sonstigen dem Fachmann bekannten flüssigen Druckmedien zur hydrostatischen Leistungsübertragung erfolgen, wobei die besagten hydraulischen Maschinen vorzugsweise in einem offenen oder geschlossenen Hydraulikkreislauf angeordnet sind. Mit anderen Worten können die besagten hydraulischen Maschinen Teil eines hydrostatischen Antriebs sein. Ferner können die besagten hydraulischen Maschinen sowohl als Hydraulikpumpen und Hydraulikmotoren betreibbar sein. Auf vorteilhafte Weise wird so ein unabhängiges und variables Bereitstellen von Antriebsmomenten an den beiden Achsen ermöglicht, wodurch flexibel auf unterschiedliche Fahrsituationen reagiert werden kann.

Gemäß einem ersten Aspekt der Erfindung können die erste elektrische Maschine und die erste hydraulische Maschine der ersten elektrohydraulischen Antriebseinrichtung eine, vorzugsweise kompakte, bauliche Einheit bilden. Beispielsweise können die erste elektrische Maschine und die erste hydraulische Maschine miteinander verbunden sein, aneinander angrenzen und/oder nebeneinander angeordnet sein. Zudem oder alternativ können die erste elektrische Maschine und die erste hydraulische Maschine auch von einem gemeinsamen Gehäuse umhaust werden. All diese Merkmale haben den Vorteil, dass dadurch eine elektrohydraulische Antriebseinheit bereitgestellt wird, die den Ein- bzw. Ausbau und damit Reparaturarbeiten erleichtert sowie frei im Kraftfahrzeug angeordnet werden kann.

Nach einem weiteren Aspekt der Erfindung kann die erste elektrische Maschine der ersten elektrohydraulischen Antriebseinrichtung nicht an der rein elektrisch antreibbaren Achse oder der elektrohydraulisch antreibbaren Achse angeordnet sein. Anders ausgedrückt soll keine unmittelbare mechanische Verbindung zwischen besagten Achsen und der ersten elektrischen Maschine bestehen. Positiv formuliert ist die erste elektrische Maschine vorzugsweise achsfern angeordnet. Zudem oder alternativ kann die erste elektrische Maschine auch mit der rein elektrisch antreibbaren Achse nicht antriebsmäßig verbunden oder verbindbar sein. Mit anderen Worten kann die erste elektrische Maschine kein Antriebsmoment an die rein elektrisch antreibbare Achse übertragen. Zudem oder alternativ kann die erste elektrische Maschine der ersten elektrohydraulischen Antriebseinrichtung ausschließlich mit der zweiten hydraulischen Maschine zur Leistungsübertragung in Antriebsverbindung stehen. D. h. die erste elektrische Maschine kann ausschließlich an die der zweiten hydraulischen Maschine ein Antriebsmoment übertragen. Auf vorteilhafte Weise ermöglichen all diese Merkmale, dass die Antriebsleistung der ersten elektrischen Maschine möglichst vollständig dem hydraulischen Antrieb zur Verfügung steht, wodurch ein leistungsstarker und weitestgehend unabhängiger hydraulischer Antriebstrang bereitgestellt wird.

Gemäß einem weiteren Aspekt der Erfindung ist rein elektrisch antreibbare Achse und/oder die elektrohydraulisch antreibbare Achse eine Starrachse. Hierbei kann die Starrachse jeweils Radträger umfassen, die über einen unbeweglichen, starren Achskörper miteinander verbunden sind, wobei der Achskörper in diesem Zusammenhang auch als Achsgehäuse bezeichnet werden kann. Vorzugsweise kann die rein elektrisch antreibbare Achse auch eine lenkbare Starrachse sein. Auf vorteilhafte Weise kann dadurch eine einfache und robuste Radaufhängung mit stabilen Spurverhalten bereitgestellt werden. Zudem oder alternativ kann auch die elektrohydraulisch antreibbare Achse eine lenkbare Achse sein, vorzugsweise eine lenkbare Starrachse oder eine lenkbare Achse mit Einzelradaufhängungen. Weiterhin kann die elektrohydraulisch antreibbare Achse eine Vorderachse und/oder die rein elektrisch antreibbare Achse eine Hinterachse sein. Als Achse soll dabei entsprechend der Definition in B. Hei-ßing (Hrsg.) et al., Fahrwerkshandbuch (DOI 10.1007/978-3-8348-8168-7), Kapitel 4, die gesamte Verbindung zweier Räder und Radaufhängung für Einzelräder samt ihrer Anbindung an das Fahrgestell bzw. den Fahrgestellrahmen verstanden werden. Ein üblicher PKW hat damit unabhängig der konkreten Ausgestaltung zwei Achsen und vier Radaufhängungen. Als "Einzelradaufhängung" soll hingegen eine Bauart der Radführung verstanden werden, bei der sich zwei gegenüberliegende Räder unabhängig voneinander bewegen können.

Nach einem weiteren Aspekt der Erfindung ist die elektrohydraulische Antriebsvorrichtung verbrennungsmotorfrei ausgeführt. Mit anderen Worten soll die elektrohydraulische Antriebsvorrichtung keinen Verbrennungsmotor, z. B. einen Otto- oder Dieselmotor, umfassen. Zudem oder alternativ kann die elektrohydraulische Antriebsvorrichtung rein mit elektrischer Energie antreibbar sein. Die elektrische Energie kann dabei beispielsweise von einem elektrischen Energiespeicher, z. B. einer Traktionsbatterie, und/oder einer Brennstoffzelle, z. B. einer Wasserstoffbrennstoffzelle, bereitgestellt werden. Der Ausdruck "rein mit elektrischer Energie antreibbar" ist dabei so zu verstehen, dass ein Betrieb der elektrohydraulischen Antriebsvorrichtung durch ein Bereitstellen elektrischer Energie bzw. durch Verbinden mit einer elektrischen Energiequelle möglich ist. Dies schließt nicht aus, dass die elektrische Energie hierfür zunächst aus einer anderen Energieform, z. B. aus einer chemisch gebundenen Form, umgewandelt wird. Auch steht dies nicht im Widerspruch dazu, dass anschließend innerhalb der Antriebsvorrichtung eine Umwandlung in hydraulische bzw. schließlich mechanische Arbeit erfolgt. Zudem oder alternativ kann die elektrohydraulische Antriebsvorrichtung einen elektrischen Energiespeicher, z. B. einer Traktionsbatterie, umfassen. Hierbei kann der elektrische Energiespeicher eingerichtet sein, die mindestens eine erste elektrische Maschine und die an der rein elektrisch antreibbaren Achse angeordnete mindestens eine elektrische Maschine mit elektrischer Energie zu versorgen. Mit anderen Worten können die besagten elektrischen Maschinen über den elektrischen Energiespeicher unmittelbar mit elektrischer Energie versorgt werden. Hierbei kann der elektrische Energiespeicher in Form einer zentralen elektrischen Energiespeichereinrichtung oder aber in Form mehrerer dezentraler und vorzugsweise der jeweiligen elektrischen Maschine zugeordneten elektrischen Energiespeichereinrichtungen ausgebildet sein. Auf vorteilhafte Weise wird durch all diese Merkmale eine Antriebsvorrichtung bereitgestellt, die nicht auf den Antrieb durch einen Verbrennungsmotor angewiesen ist und sich damit besonders für den Einsatz in Elektrofahrzeugen eignet.

Nach einem weiteren Aspekt der Erfindung können an der elektrohydraulisch antreibbaren Achse zwei hydraulische Maschinen angeordnet sein, die beide zur Leistungsübertragung in Fluidkommunikation mit der ersten hydraulischen Maschine der ersten elektrohydraulischen Antriebseinrichtung stehen. Mit anderen Worten kann die erste hydraulische Maschine der ersten elektrohydraulischen Antriebseinrichtung hydraulische Leistung an beide an der elektrohydraulisch antreibbaren Achse angeordneten hydraulischen Maschinen übertragen.

Gemäß einem weiteren Aspekt der Erfindung kann die elektrohydraulische Antriebsvorrichtung ferner eine zweite elektrohydraulische Antriebseinrichtung aufweisen. Die zweite elektrohydraulische Antriebseinrichtung kann dabei eine zweite elektrische Maschine sowie eine zweite hydraulische Maschine umfassen. Wie vorstehend bereits erwähnt, dient auch hier die Ordnungszahlangabe "zweite" wiederum ausschließlich der besseren Unterscheidbarkeit der Maschinen von den bisherigen bzw. weiteren später noch genannten elektrischen/hydraulischen Maschinen. Ferner kann die zweite hydraulische Maschine mit der zweiten elektrischen Maschine zur Leistungsübertragung in Antriebsverbindung stehen sowie mit mindestens einer an der elektrohydraulisch antreibbaren Achse angeordneten hydraulischen Maschine zur Leistungsübertragung in Fluidkommunikation stehen. Auch hier kann - wie vorstehend bereits erwähnt - das Realisieren der Fluidkommunikation beispielsweise mittels in Hydraulikleitungen geführten Flüssigkeiten (z. B. Mineralöl) und/oder sonstigen dem Fachmann bekannten flüssigen Druckmedien zur hydrostatischen Leistungsübertragung erfolgen. Bevorzugt können die besagten hydraulischen Maschinen wiederum in einem offenen oder geschlossenen Hydraulikkreislauf angeordnet sein. Auch wenn - wie nachfolgend noch genauer ausgeführt - zur flexiblen Antriebsmomentverteilung die erste hydraulische Maschine der ersten elektrohydraulischen Antriebseinrichtung und die zweite hydraulische Maschine der zweiten elektrohydraulischen Antriebseinrichtung jeweils mit unterschiedlichen an der elektrohydraulisch antreibbaren Achse angeordneten hydraulischen Maschine zur Leistungsübertragung in Fluidkommunikation stehen, so können die erste und zweite hydraulische Maschine auch mit derselben an der elektrohydraulisch antreibbaren Achse angeordneten hydraulischen Maschine zur Leistungsübertragung in Fluidkommunikation stehen. Insgesamt wird durch die zweite elektrohydraulische Antriebseinrichtung auf vorteilhafte Weise ein paralleler elektrohydraulischer Antriebstrang bereitgestellt, wodurch ein noch flexibleres Bereitstellen von Antriebsmoment an den beiden Achsen ermöglicht wird.

Nach einer Weiterbildung dieses Aspekts können an der elektrohydraulisch antreibbaren Achse zwei hydraulische Maschinen angeordnet sein. Hierbei kann eine der zwei hydraulischen Maschinen zur Leistungsübertragung in Fluidkommunikation mit der ersten hydraulischen Maschine der ersten elektrohydraulischen Antriebseinrichtung stehen, während eine andere der zwei hydraulischen Maschinen zur Leistungsübertragung in Fluidkommunikation mit der zweiten hydraulischen Maschine der zweiten elektrohydraulischen Antriebseinrichtung stehen kann. Mit anderen Worten stehen die erste hydraulische Maschine der ersten elektrohydraulischen Antriebseinrichtung und die zweite hydraulische Maschine der zweiten elektrohydraulischen Antriebseinrichtung jeweils mit unterschiedlichen an der elektrohydraulisch antreibbaren Achse angeordneten hydraulischen Maschinen zur Leistungsübertragung in Fluidkommunikation. Auf vorteilhafte Weise können dadurch die, an der elektrohydraulisch antreibbaren Achse angeordneten, hydraulischen Maschinen unabhängig voneinander betrieben werden, wodurch ein variables Verteilen der Antriebsmomente in Querrichtung ermöglicht wird. Dadurch kann gerade für Kurvenfahrten die Fahrstabilität verbessert werden bzw. durch gezieltes Umverteilen der Antriebsmomente auf Schlupf eines Rades reagiert werden.

Gemäß einem weiteren Aspekt der Erfindung können an der elektrohydraulisch antreibbaren Achse genau zwei hydraulische Maschinen angeordnet sein. Diese können dabei ferner unabhängig voneinander betreibbar sein. Der Ausdruck "unabhängig voneinander betreibbar" kann dabei sowohl das Bereitstellen eines unterschiedlichen Antriebsmoments als auch den Betrieb der beiden hydraulischen Maschinen in unterschiedlichen Betriebsmodi, z. B. eine hydraulische Maschine als Hydropumpe und die andere als Hydromotor, umfassen. Zudem oder alternativ können die zwei hydraulischen Maschinen auch an unterschiedlichen radseitigen Endbereichen der elektrohydraulisch antreibbaren Achse angeordnet sein. Anders ausgedrückt können die hydraulischen Maschinen außen an der Achse angeordnet sein, wodurch auf vorteilhafte Weise auf lange, elastischen Steckwellen verzichtet werden kann. Zudem oder alternativ können die beiden hydraulischen Maschinen auch als hydraulische Radnabenmaschinen ausgebildet sein, d. h., die hydraulischen Maschinen können direkt an der Radnabe platziert werden.

Um ferner auf vorteilhafte Weise auf die Verwendung eines Achsdifferentials zu verzichten, können nach einem weiteren Aspekt der Erfindung an der rein elektrisch antreibbaren Achse zwei elektrische Maschinen angeordnet sein. Die beiden elektrischen Maschinen können dabei je an unterschiedlichen radseitigen Endbereichen der rein elektrisch antreibbaren Achse angeordnet sein. Beispielsweise können die elektrischen Maschinen außen an der Achse angeordnet sein, wodurch auch hier auf vorteilhafte Weise auf lange, elastische Steckwellen verzichtet werden kann. Zudem oder alternativ können die beiden elektrischen Maschinen ferner als elektrische Radnabenmaschinen ausgebildet sein, wodurch die elektrischen Maschinen auf vorteilhafte Weise direkt an der Radnabe platziert werden können. Zudem oder alternativ können die beiden elektrischen Maschinen auch innerhalb eines Achsgehäuses der rein elektrisch antreibbaren Achse angeordnet sein. Auf vorteilhafte Weise sind die elektrischen Maschinen dadurch vor Nässe und Schmutz geschützt. Zudem oder alternativ können die beiden elektrischen Maschinen auch in einem mittleren Bereich der rein elektrisch antreibbaren Achse angeordnet sein. Vorzugsweise sind die beiden elektrischen Maschinen dabei in der Mitte eines Achsgehäuses der rein elektrisch antreibbaren Achse angeordnet. Dies bietet den Vorzug, dass der mit dem Wegfall des Achsdifferentials frei werdende Bauraum zur Anordnung der elektrischen Maschinen genutzt werden kann.

Gemäß einem weiteren Aspekt der Erfindung kann die elektrohydraulische Antriebsvorrichtung eine weitere rein elektrisch antreibbare Achse umfassen, an der mindestens eine elektrische Maschine angeordnet ist. Insgesamt weist die elektrohydraulische Antriebsvorrichtung somit drei Achsen - eine elektrohydraulisch antreibbare sowie zwei rein elektrisch antreibbare Achsen - auf. Dabei sollen die vorstehenden im Zusammenhang mit der "ersten" rein elektrisch antreibbaren Achse offenbarten Merkmale, auch im Zusammenhang mit der "weiteren" rein elektrisch antreibbaren Achse offenbart und beanspruchbar sein. D. h., auch an der "weiteren" rein elektrisch antreibbaren Achse können vorzugsweise zwei elektrische Maschinen angeordnet sein, die je an unterschiedlichen radseitigen Endbereichen der weiteren rein elektrisch antreibbaren Achse angeordnet sein können bzw. als elektrische Radnabenmaschinen ausgebildet sein können. Weiterhin können diese beiden elektrischen Maschinen auch innerhalb eines Achsgehäuses der "weiteren" rein elektrisch antreibbaren Achse angeordnet sein und/oder in einem mittleren Bereich der "weiteren" rein elektrisch antreibbaren Achse angeordnet sein. Ferner ist es für den Fachmann auch offensichtlich, dass die elektrohydraulische Antriebsvorrichtung darüber hinaus auch noch zusätzliche - d. h. mehr als zwei - rein elektrisch antreibbare Achsen und/oder weitere elektrohydraulisch antreibbare Achsen umfassen kann. Auf vorteilhafte Weise wird dadurch auch für mehrachsige Fahrzeuge eine Antriebsvorrichtung bereitgestellt, die ein unabhängiges und variables Bereitstellen von Antriebsmomenten an den Achsen ermöglicht.

Nach einer Weiterbildung dieses Aspekts können die beiden rein elektrisch antreibbaren Achsen als Doppelachsaggregat ausgebildet sein. Bei einem Doppelachsaggregat eines Nutzfahrzeugs sind im Unterschied zu einer Nachlauf- oder Vorlaufachse beide Achsen für gleiche Traglasten ausgelegt. Ferner sind beide Achsen gleichartig bereift, d. h., die Räder der beiden Achsen sind entweder alle doppelbereift oder alle einfach bereift. Die Räder der Achsen eines Doppelachsaggregats sind zudem nicht lenkbar. Weiterhin beträgt der Abstand der beiden Achsen in Fahrtrichtung des Nutzfahrzeugs in der Regel weniger als zwei Meter.

Ferner können sowohl die an der bzw. den rein elektrisch antreibbaren Achse(n) angeordneten elektrischen Maschinen, als auch die "erste" und/oder "zweite" elektrische Maschine(n) der ersten bzw. zweiten elektrohydraulischen Antriebseinrichtung als motorisch und generatorisch betreibbare elektrische Maschinen ausgebildet sein. Mit anderen Worten können die besagten elektrischen Maschinen ausgebildet sein, in einer ersten Betriebsart elektrische Energie in Bewegungsenergie umzuwandeln und in einer zweiten Betriebsart Bewegungsenergie in elektrische Energie. Zudem oder alternativ können auch die an der bzw. den elektrohydraulisch antreibbaren Achse(n) angeordneten hydraulischen Maschinen, sowie auch die "erste" und/oder "zweite" hydraulische Maschine(n) der ersten bzw. zweiten elektrohydraulischen Antriebseinrichtung sowohl als Hydraulikmotor und Hydraulikpumpe betreibbar sein. Anders ausgedrückt können die besagten hydraulischen Maschinen ausgebildet sein, in einer ersten Betriebsart hydraulische Energie in Bewegungsenergie umzuwandeln und in einer zweiten Betriebsart Bewegungsenergie in hydraulische Energie. Auch wenn vorliegend in erster Linie ein Antrieb der rein elektrisch antreibbaren Achse bzw. der elektrohydraulisch antreibbaren Achse vorgesehen ist, so kann durch die Doppelfunktion der jeweiligen elektrischen bzw. hydraulischen Maschinen auf vorteilhafte Weise auch ein rekuperativer Betrieb realisiert werden.

Gemäß einem weiteren Aspekt der Erfindung kann die elektrohydraulische Antriebsvorrichtung auch eine Steuereinrichtung umfassen. Die Steuereinrichtung kann dabei ausgebildet sein, die elektrohydraulische Antriebsvorrichtung in einem ersten Betriebsmodus zur Erhöhung der Fahrleistung zu betreiben. In diesem sollen sowohl die rein elektrisch antreibbare Achse als auch die elektrohydraulisch antreibbare Achse angetrieben werden. Auf vorteilhafte Weise kann so in Situationen, in denen eine hohe Traktion gefordert ist, ein möglichst großes Antriebsmoment von der elektrohydraulischen Antriebsvorrichtung bereitgestellt. Zudem oder alternativ kann die Steuereinrichtung auch ausgebildet sein, die elektrohydraulische Antriebsvorrichtung in einem zweiten Betriebsmodus zum rekuperativen Bremsbetrieb zu betreiben. In diesem soll mindestens eine elektrische Maschine der rein elektrisch antreibbaren Achse generatorisch und/oder mindestens eine hydraulische Maschine der elektrohydraulisch antreibbaren Achse als Hydraulikpumpe betrieben werden. Mit anderen Worten kann im zweiten Betriebsmodus an mindestens einer der Achsen kinetische Energie mittelbar oder unmittelbar in elektrische Energie umgewandelt werden. Vorzugsweise wird die so gewonnene elektrische Energie anschließend in einem elektrischen Energiespeicher der elektrohydraulischen Antriebsvorrichtung gespeichert. Auf vorteilhafte Weise kann dadurch der Energieverbrauch der elektrohydraulischen Antriebsvorrichtung gesenkt und dadurch deren Effizienz erhöht werden.

Nach einer Weiterbildung dieses Aspekts können ferner an der rein elektrisch antreibbaren Achse mindestens zwei elektrische Maschinen angeordnet sein und/oder an der elektrohydraulisch antreibbaren Achse mindestens zwei hydraulische Maschinen angeordnet sein. Vorzugsweise sind dabei zwei der elektrischen Maschinen bzw. zwei der hydraulischen Maschinen je an unterschiedlichen radseitigen Endbereichen der jeweiligen Achse angeordnet und/oder sind als Radnabenmaschinen ausgebildet. Ferner kann die Steuereinrichtung ausgebildet sein, die elektrohydraulische Antriebsvorrichtung in einem dritten Betriebsmodus zur Antriebsmomentverteilung zu betreiben. In diesem sollen zwei der elektrischen Maschinen und/oder zwei der hydraulischen Maschinen unterschiedliche Antriebsmomente bereitstellen. Mit anderen Worten kann im dritten Betriebsmodus ein asymmetrischer Antrieb erreicht werden. Beispielsweise kann im dritten Betriebsmodus das Antriebsmoment bei einem im Vergleich zu den übrigen Rädern langsamer drehenden Rad erhöht werden, um damit die Stabilität, z. B. bei einem Spurwechsel, zu erhöhen. Zudem oder alternativ kann im dritten Betriebsmodus aber auch das Antriebsmoment bei einem im Vergleich zu den übrigen Rädern schneller drehenden Rad erhöht werden. Ferner kann an einem offenbar durchdrehenden Rad auch das Antriebsmoment reduziert werden. Insgesamt kann damit auf vorteilhafte Weise das Fahrverhalten bzw. die Fahrstabilität verbessert werden.

Ferner wird erfindungsgemäß ein Kraftfahrzeug bereitgestellt, umfassend eine elektrohydraulische Antriebsvorrichtung, wie in diesem Dokument beschrieben. Vorzugsweise handelt es sich bei dem Kraftfahrzeug dabei um ein Nutzfahrzeug, wie z. B. einen Lastkraftwagen oder Omnibus. Auf vorteilhafte Weise wird somit ein mehrachsiges Kraftfahrzeug bereitgestellt, das ein unabhängiges und variables Bereitstellen von Antriebsmomenten an den Achsen ermöglicht, wodurch flexibel auf unterschiedliche Fahrsituationen reagiert werden kann.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine elektrohydraulische Antriebsvorrichtung für ein Kraftfahrzeug gemäß einer ersten Ausführungsform der Erfindung;
- Figur 2:: eine elektrohydraulische Antriebsvorrichtung für ein Kraftfahrzeug gemäß einer zweiten Ausführungsform der Erfindung; und
- Figur 3:: ein Kraftfahrzeug umfassend eine elektrohydraulische Antriebsvorrichtung gemäß einer Ausführungsform der Erfindung.

Gleiche oder funktional äquivalente Elemente sind dabei in allen Figuren mit denselben Bezugszeichen bezeichnet und zum Teil nicht gesondert beschrieben.

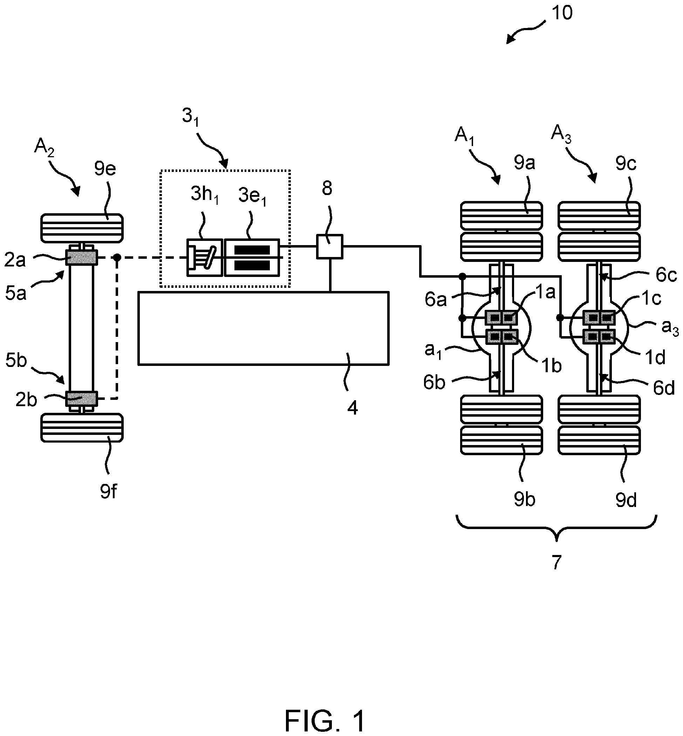

Figur 1 zeigt eine elektrohydraulische Antriebsvorrichtung 10 für ein Kraftfahrzeug 20, vorzugsweise ein Nutzfahrzeug, gemäß einer ersten Ausführungsform der Erfindung. Die elektrohydraulische Antriebsvorrichtung 10 umfasst hierbei ein rein elektrisch antreibbares Doppelachsaggregat 7 aus zwei rein elektrisch antreibbaren Achsen A₁ und A₃. Jede der beiden rein elektrisch antreibbaren Achsen A₁ und A₃ ist dabei als eine Starrachse mit einem entsprechenden Achsgehäuse a₁, a₃ ausgebildet. An jeder Achse sind ferner jeweils in einem mittleren Bereich innerhalb des entsprechenden Achsgehäuses a₁, a₃ zwei elektrische Maschinen 1a und 1b bzw. 1c und 1d angeordnet, die wiederum über eine entsprechende Radantriebswellen 6a, 6b, 6c, 6d mit je einem Rad 9a, 9b, 9c, 9d antriebsmäßig verbunden sind.

Weiterhin umfasst die elektrohydraulische Antriebsvorrichtung 10 eine elektrohydraulisch antreibbare Achse A₂, die vorliegend als eine lenkbare Starrachse ausgebildet ist. An dieser sind - jeweils an unterschiedlichen radseitigen Endbereichen 5a, 5b - zwei hydraulische Maschinen 2a, 2b in Form zweier hydraulischer Radnabenmaschinen angeordnet, die je mit einem Rad 9e, 9f in Antriebsverbindung stehen. Die beiden hydraulischen Maschinen 2a, 2b stehen ferner mittels entsprechender Hydraulikleitungen mit einer hydraulischen Maschine 3h₁, die nachfolgende zur besseren Unterscheidbarkeit als "erste" hydraulische Maschine 3h, bezeichnet werden soll, zur Leistungsübertragung in Fluidkommunikation. Anders ausgedrückt sind die besagten hydraulischen Maschinen 2a, 2b und 3h, fluidisch gekoppelt, um zwischen diesen hydraulische Leistung zu übertragen. Weiterhin umfasst die elektrohydraulische Antriebsvorrichtung 10 eine elektrische Maschine 3e₁, die mit der ersten hydraulischen Maschine zur Leistungsübertragung in Antriebsverbindung steht und daher nachfolgend als "erste" elektrische Maschine 3e, bezeichnet werden soll. Vorliegend ist dabei die Antriebsverbindung dadurch realisiert, dass eine Ausgangswelle der ersten elektrischen Maschine 3e, mit einer Eingangswelle der ersten hydraulischen Maschine 3h, verbunden ist. Aufgrund dieser Verbindung sowie der angrenzenden Anordnung können die erste elektrische Maschine 3e, und die erste hydraulische Maschine 3h, als eine bauliche Einheit aufgefasst werden, die als erste elektrohydraulische Antriebseinrichtung 3, bezeichnet werden soll.

Um die an den Achsen angeordneten elektrischen Maschinen 1a, 1b, 1c und 1d sowie die erste elektrische Maschine 3e, der ersten elektrohydraulischen Antriebseinrichtung 3, mit elektrischer Energie zu versorgen, stehen diese alle mittels elektrischer Leitungen mit einem zentralen elektrischen Energiespeicher 4, z. B. einer Traktionsbatterie, in Verbindung. Alternativ können jedoch auch mehrere dezentrale elektrische Energiespeicher vorgesehen sein, die jeweils nur mit einem Teil der elektrischen Maschinen in Verbindung stehen. Zur Steuerung der elektrischen Energieflüsse und damit der Antriebsmomente an den jeweiligen Rädern 9a - 9f umfasst die elektrohydraulische Antriebsvorrichtung 10 ferner auch eine Steuereinrichtung 8. Diese ist ausgebildet, die Energieflüsse variable zu steuern, wodurch die elektrohydraulische Antriebsvorrichtung 10 in unterschiedlichen Betriebsmodi betrieben werden kann. Auf vorteilhafte Weise kann so ein unabhängiges und variables Bereitstellen von Antriebsmomenten an den Achsen A_{1,} A₂, A₃ bzw. an den einzelnen Rändern 9a - 9f ermöglicht werden, wodurch mit der erfindungsgemäßen Antriebsvorrichtung 10 flexibel auf unterschiedliche Fahrsituationen (z. B. Schlupf der Antriebsräder) reagiert werden kann.

Darüber hinaus sind sowohl die an den Achsen A₁ und A₃ angeordneten elektrischen Maschinen 1a, 1b, 1c, 1d als auch die "erste" elektrische Maschine 3e, der ersten elektrohydraulischen Antriebseinrichtung 3₁ als motorisch und generatorisch betreibbare elektrische Maschinen ausgebildet. Ferner sind auch die an der elektrohydraulisch antreibbaren Achse A₂ angeordneten hydraulischen Maschinen 2a und 2b sowie auch die "erste" hydraulische Maschine 3h, der ersten elektrohydraulischen Antriebseinrichtung 3, sowohl als Hydraulikmotor als auch als Hydraulikpumpe betreibbar. Entsprechend kann somit neben einem entsprechenden Antrieb der jeweiligen Achsen A_{1,} A₂, A₃ bzw. Räder 9a - 9f auf vorteilhafte Weise auch ein rekuperativer Betrieb realisiert werden, bei dem Bewegungsenergie unmittelbar oder mittelbar in elektrische Energie umgewandelt wird, die zum Laden des elektrischen Energiespeichers 4 verwendet werden kann.

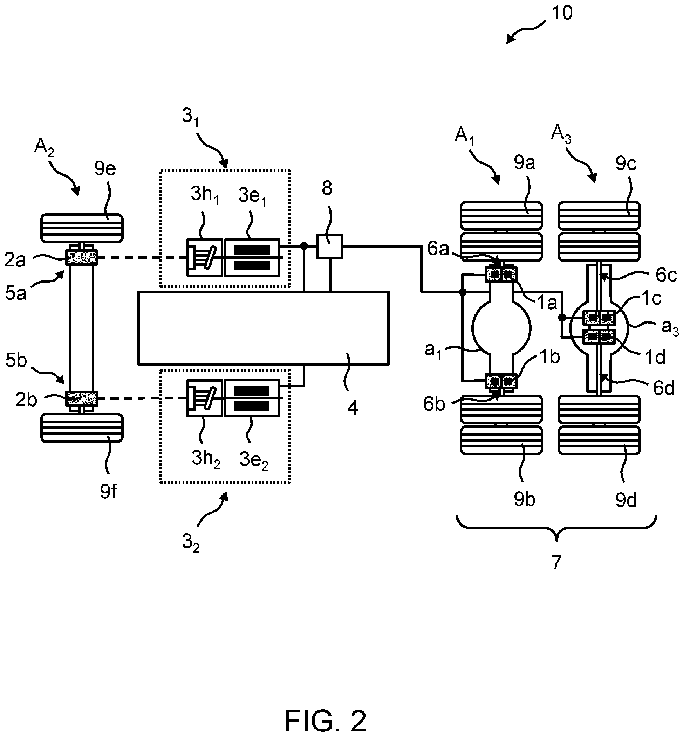

Figur 2 zeigt eine elektrohydraulische Antriebsvorrichtung 10 für ein Kraftfahrzeug 20 gemäß einer zweiten Ausführungsform der Erfindung. Erneut umfasst die elektrohydraulische Antriebsvorrichtung 10 ein Doppelachsaggregat 7 mit zwei rein elektrisch antreibbare Achsen A₁ und A₃ sowie eine elektrohydraulisch antreibbare Achse A₂. Im Unterschied zu der in Figur 1 gezeigten Ausführungsform sind die beiden elektrischen Maschinen 1a und 1b der rein elektrisch antreibbaren Achse A₁ vorliegend nicht in einem mittleren Bereich der Achse, sondern jeweils an unterschiedlichen radseitigen Endbereichen angeordnet und als elektrische Radnabenmaschinen ausgebildet.

Ferner unterscheidet sich die Versorgung der hydraulischen Maschinen 2a und 2b der elektrohydraulisch antreibbaren Achse A₂. Während in der in Figur 1 gezeigten Ausführungsform die elektrohydraulische Antriebsvorrichtung 10 nur eine, als "erste" bezeichnete, elektrohydraulische Antriebseinrichtung 3₁ umfasste, die mit beiden hydraulischen Maschinen 2a und 2b in Fluidkommunikation stand, sind vorliegend zwei elektrohydraulische Antriebseinrichtungen 3₁ und 3₂ vorgesehen. Konkret umfasst die elektrohydraulische Antriebsvorrichtung 10 somit eine "erste" elektrohydraulische Antriebseinrichtung 3₁, die - wie zuvor - eine erste elektrische Maschine 3e, und eine erste hydraulische Maschine 3h₁, die mit der ersten elektrischen Maschine 3e, zur Leistungsübertragung in Antriebsverbindung steht, aufweist. Allerdings steht die erste hydraulische Maschine 3h, nur mit einer der beiden an der elektrohydraulisch antreibbaren Achse A₂ angeordneten hydraulischen Maschinen 2a, 2b zur Leistungsübertragung in Fluidkommunikation (vorliegend 2a). Zum Antrieb der weiteren hydraulischen Maschine 2b umfasst in dieser Ausführungsform die elektrohydraulische Antriebsvorrichtung 10 eine "zweite" elektrohydraulische Antriebseinrichtung 3₂. Auch diese umfasst dabei eine als "zweite" elektrische Maschine 3e₂ bezeichnete elektrische Maschine sowie eine als "zweite" hydraulische Maschine 3h₂ bezeichnete hydraulische Maschine, die mit der zweiten elektrischen Maschine 3e₂ zur Leistungsübertragung in Antriebsverbindung steht. Die zweite hydraulische Maschine 3h₂ steht weiterhin mit der an der elektrohydraulisch antreibbaren Achse A₂ angeordneten hydraulischen Maschinen 2b zur Leistungsübertragung in Fluidkommunikation. Auf vorteilhafte Weise können dadurch die, an der elektrohydraulisch antreibbaren Achse A₂ angeordneten, hydraulischen Maschinen 2a und 2b unabhängig voneinander betrieben werden, wodurch ein variables Verteilen der Antriebmomente in Querrichtung ermöglicht wird. Dadurch kann gerade für Kurvenfahrten die Fahrstabilität verbessert werden bzw. durch gezieltes Umverteilen der Antriebsmomente auf Schlupf der Räder 9e bzw. 9f reagiert werden.

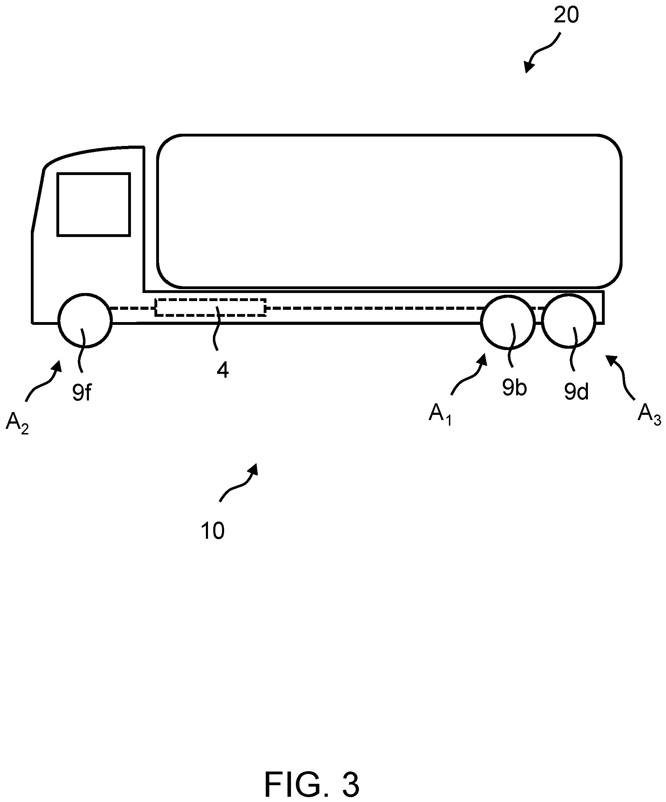

Figur 3 zeigt ein Kraftfahrzeug 20, umfassend eine elektrohydraulische Antriebsvorrichtung 10 gemäß einer Ausführungsform der Erfindung. Vorliegend handelt es sich bei dem Kraftfahrzeug 20 um ein Nutzfahrzeug in Form eines Lastkraftwagens mit drei antreibbaren Achsen A_{1,} A₂ und A₃. Auf vorteilhafte Weise wird somit ein mehrachsiges Kraftfahrzeug 20 bereitgestellt, das ein unabhängiges und variables Bereitstellen von Antriebsmomenten an den Achsen A_{1,} A₂, A₃ ermöglicht, wodurch flexibel auf unterschiedliche Fahrsituationen reagiert werden kann. Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung verlassen, der durch die beigefügten Patentansprüche definiert ist. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1a-1d: Elektrische Maschine
- 2a, 2b: Hydraulische Maschine
- 3₁: Erste elektrohydraulische Antriebseinrichtung
- 3₂: Zweite elektrohydraulische Antriebseinrichtung
- 3e,: Erste elektrische Maschine
- 3h₁: Erste hydraulische Maschine
- 3e₂: Zweite elektrische Maschine
- 3h₂: Zweite hydraulische Maschine
- 4: Energiespeicher
- 5a, 5b: Radseitiger Endbereich
- 6a-6d: Radantriebswelle
- 7: Doppelachsaggregat
- 8: Steuereinrichtung
- 9a - 9f: Räder
- 10: Elektrohydraulische Antriebsvorrichtung
- 20: Kraftfahrzeug
- A_{1,} A₃: Rein elektrisch antreibbare Achse
- A₂: Elektrohydraulisch antreibbare Achse
- a₁-a₃: Achsgehäuse

## Patentansprüche

1. Elektrohydraulische Antriebsvorrichtung (10) für ein Kraftfahrzeug (20), vorzugsweise Nutzfahrzeug, wobei die elektrohydraulische Antriebsvorrichtung (10) verbrennungsmotorfrei ausgeführt ist, umfassend
a) eine rein elektrisch antreibbare Achse (A₁), an der mindestens eine elektrische Maschine (1a) angeordnet ist;
b) eine elektrohydraulisch antreibbare Achse (A₂), an der mindestens eine hydraulische Maschine (2a), angeordnet ist; und
c) eine erste elektrohydraulische Antriebseinrichtung (3₁), umfassend
- eine erste elektrische Maschine (3e₁) und
- eine erste hydraulische Maschine (3h₁), die mit der ersten elektrischen Maschine (3e,) zur Leistungsübertragung in Antriebsverbindung steht und die mit mindestens einer an der elektrohydraulisch antreibbaren Achse (A₂) angeordneten hydraulischen Maschine (2a) zur Leistungsübertragung in Fluidkommunikation steht;
**dadurch gekennzeichnet, dass** die rein elektrisch antreibbare Achse (A₁) eine Starrachse ist und/oder die elektrohydraulisch antreibbare Achse (A₂) eine Starrachse ist.

2. Elektrohydraulische Antriebsvorrichtung (10) nach Anspruch 1, **dadurch gekennzeichnet, dass** die erste elektrische Maschine (3e₁) und die erste hydraulische Maschine (3h₁) der ersten elektrohydraulischen Antriebseinrichtung (3₁),
a) eine bauliche Einheit bilden; und/oder
b) miteinander verbunden sind; und/oder
c) aneinander angrenzen oder nebeneinander angeordnet sind; und/oder
d) von einem gemeinsamen Gehäuse umhaust werden.

3. Elektrohydraulische Antriebsvorrichtung (10) nach einem der vorherigen Ansprüche, **dadurch gekennzeichnet, dass** die erste elektrische Maschine (3e,) der ersten elektrohydraulischen Antriebseinrichtung (3₁)
a) nicht an der rein elektrisch antreibbaren Achse (A₁) oder der elektrohydraulisch antreibbaren Achse (A₂) angeordnet ist; und/oder
b) mit der rein elektrisch antreibbaren Achse (A₁) nicht antriebsmäßig verbunden oder verbindbar ist; und/oder
c) ausschließlich mit der ersten hydraulischen Maschine (3h₁) zur Leistungsübertragung in Antriebsverbindung steht.

4. Elektrohydraulische Antriebsvorrichtung (10) nach einem der vorherigen Ansprüche, **dadurch gekennzeichnet, dass** die elektrohydraulisch antreibbare Achse (A₂) eine lenkbare Achse ist.

5. Elektrohydraulische Antriebsvorrichtung (10) nach einem der vorherigen Ansprüche, **dadurch gekennzeichnet, dass** die elektrohydraulische Antriebsvorrichtung (10)
a) einen elektrischen Energiespeicher (4) umfasst, der eingerichtet ist, die mindestens eine erste elektrische Maschine (1a) und die an der rein elektrisch antreibbaren Achse (A₁) angeordnete mindestens eine elektrische Maschine (1a) mit elektrischer Energie zu versorgen; und/oder
b) rein mit elektrischer Energie antreibbar ist.

6. Elektrohydraulische Antriebsvorrichtung (10) nach einem der vorherigen Ansprüche, **dadurch gekennzeichnet, dass** an der elektrohydraulisch antreibbaren Achse (A₂) zwei hydraulische Maschinen (2a, 2b) angeordnet sind, die beide zur Leistungsübertragung in Fluidkommunikation mit der ersten hydraulischen Maschine (3h₁) der ersten elektrohydraulischen Antriebseinrichtung (3₁) stehen.

7. Elektrohydraulische Antriebsvorrichtung (10) nach einem der vorherigen Ansprüche, **gekennzeichnet durch** eine zweite elektrohydraulische Antriebseinrichtung (3₂), umfassend
- eine zweite elektrische Maschine (3e₂) und
- eine zweite hydraulische Maschine (3h₂), die mit der zweiten elektrischen Maschine (3e₂) zur Leistungsübertragung in Antriebsverbindung steht und die mit mindestens einer an der elektrohydraulisch antreibbaren Achse (A₂) angeordneten hydraulischen Maschine (2a) zur Leistungsübertragung in Fluidkommunikation steht.

8. Elektrohydraulische Antriebsvorrichtung (10) nach Anspruch 7, **dadurch gekennzeichnet, dass** an der elektrohydraulisch antreibbaren Achse (A₂) zwei hydraulische Maschinen (2a, 2b) angeordnet sind, wobei
a) eine der zwei hydraulischen Maschinen (2a, 2b) zur Leistungsübertragung in Fluidkommunikation mit der ersten hydraulischen Maschine (3h₁) der ersten elektrohydraulischen Antriebseinrichtung (3₁) steht; und
b) die andere der zwei hydraulischen Maschinen (2a, 2b) zur Leistungsübertragung in Fluidkommunikation mit der zweiten hydraulischen Maschine (3h₂) der zweiten elektrohydraulischen Antriebseinrichtung (3₂) steht.

9. Elektrohydraulische Antriebsvorrichtung (10) nach einem der vorherigen Ansprüche, **dadurch gekennzeichnet, dass** an der elektrohydraulisch antreibbaren Achse (A₂) genau zwei hydraulische Maschinen (2a, 2b), angeordnet sind, die
a) unabhängig voneinander betreibbar sind; und/oder
b) an unterschiedlichen radseitigen Endbereichen (5a, 5b) der elektrohydraulisch antreibbaren Achse (A₂) angeordnet sind; und/oder
c) als hydraulische Radnabenmaschinen ausgebildet sind.

10. Elektrohydraulische Antriebsvorrichtung (10) nach einem der vorherigen Ansprüche, **dadurch gekennzeichnet, dass** an der rein elektrisch antreibbaren Achse (A₁) zwei elektrische Maschinen (1a, 1b) angeordnet sind, die
a) in einem mittleren Bereich der rein elektrisch antreibbaren Achse (A₁) angeordnet sind; und/oder
b) innerhalb eines Achsgehäuses (a₁) der rein elektrisch antreibbaren Achse (A₁) angeordnet sind; und/oder
c) je an unterschiedlichen radseitigen Endbereichen der rein elektrisch antreibbaren Achse (A₁) angeordnet sind; und/oder
d) als elektrische Radnabenmaschinen ausgebildet sind.

11. Elektrohydraulische Antriebsvorrichtung (10) nach einem der vorherigen Ansprüche, **gekennzeichnet durch** eine weitere rein elektrisch antreibbare Achse (A₃), an der mindestens eine elektrische Maschine (1c) angeordnet ist.

12. Elektrohydraulische Antriebsvorrichtung (10) nach Anspruch 10, **dadurch gekennzeichnet, dass** die beiden rein elektrisch antreibbaren Achsen (A₁, A₃) als Doppelachsaggregat (7) ausgebildet sind.

13. Elektrohydraulische Antriebsvorrichtung (10) nach einem der vorherigen Ansprüche, **gekennzeichnet durch** eine Steuereinrichtung (8), die ausgebildet ist, die elektrohydraulische Antriebsvorrichtung (10)
a) in einem ersten Betriebsmodus zur Erhöhung der Fahrleistung zu betreiben, in dem sowohl die rein elektrisch antreibbare Achse (A₁) als auch die elektrohydraulisch antreibbare Achse (A₂) angetrieben werden; und/oder
b) in einem zweiten Betriebsmodus zum rekuperativen Bremsbetrieb zu betreiben, in dem mindestens eine elektrische Maschine (1a) der rein elektrisch antreibbaren Achse (A₁) generatorisch betrieben wird und/oder mindestens eine hydraulische Maschine (2a) der elektrohydraulisch antreibbaren Achse (A₂) als Hydraulikpumpe betrieben wird.

14. Elektrohydraulische Antriebsvorrichtung (10) nach Anspruch 13, **dadurch gekennzeichnet, dass**
a) an der rein elektrisch antreibbaren Achse (A₁) mindestens zwei elektrische Maschinen (1a, 1b) angeordnet sind und/oder an der elektrohydraulisch antreibbaren Achse (A₂) mindestens zwei hydraulische Maschinen (2a, 2b) angeordnet sind; und
b) die Steuereinrichtung (8) ausgebildet ist, die elektrohydraulische Antriebsvorrichtung (10) in einem dritten Betriebsmodus zur Antriebsmomentverteilung zu betreiben, in dem zwei der elektrischen Maschinen (1a, 1b) und/oder zwei der hydraulischen Maschinen (2a, 2b) unterschiedliche Antriebsmomente bereitstellen.

15. Kraftfahrzeug (20), vorzugsweise Nutzfahrzeug wie z. B. ein Lastkraftwagen oder Omnibus, umfassend eine elektrohydraulische Antriebsvorrichtung (10) nach einem der vorherigen Ansprüche.

## Claims

1. Electrohydraulic drive apparatus (10) for a motor vehicle (20), preferably utility vehicle, wherein the electrohydraulic drive apparatus (10) is embodied without an internal combustion engine, comprising
a) a purely electrically driveable axle (A₁) on which at least one electric machine (1a) is arranged;
b) an electrohydraulically driveable axle (A₂) on which at least one hydraulic machine (2a) is arranged; and
c) a first electrohydraulic drive device (3₁), comprising
- a first electric machine (3e₁) and
- a first hydraulic machine (3h₁) which is drive-connected to the first electric machine (3e₁) for power transfer and which is in fluid communication with at least one hydraulic machine (2a), which is arranged on the electrohydraulically driveable axle (A₂), for power transfer;
**characterized in that** the purely electrically driveable axle (A₁) is a rigid axle; and/or the electrohydraulically driveable axle (A₂) is a rigid axle.

2. Electrohydraulic drive apparatus (10) according to Claim 1, **characterized in that** the first electric machine (3e₁) and the first hydraulic machine (3h₁) of the first electrohydraulic drive device (3₁)
a) form one structural unit; and/or
b) are connected to one another; and/or
c) adjoin one another or are arranged next to one another; and/or
d) are enclosed by a common housing.

3. Electrohydraulic drive apparatus (10) according to either of the preceding claims, **characterized in that** the first electric machine (3e₁) of the first electrohydraulic drive device (3₁)
a) is not arranged on the purely electrically driveable axle (A₁) or the electrohydraulically driveable axle (A₂); and/or
b) is not connected or connectable to the purely electrically driveable axle (A₁) in respect of driving; and/or
c) is drive-connected solely to the first hydraulic machine (3h₁) for power transfer.

4. Electrohydraulic drive apparatus (10) according to one of the preceding claims, **characterized in that**
the electrohydraulically driveable axle (A₂) is a steerable axle.

5. Electrohydraulic drive apparatus (10) according to one of the preceding claims, **characterized in that** the electrohydraulic drive apparatus (10)
a) comprises an electrical energy storage device (4) which is designed to supply electrical energy to at least one first electric machine (1a) and at least one electric machine (1a) arranged on the purely electrically driveable axle (A₁); and/or
b) is driveable purely using electrical energy.

6. Electrohydraulic drive apparatus (10) according to one of the preceding claims, **characterized in that** two hydraulic machines (2a, 2b) are arranged on the electrohydraulically driveable axle (A₂), both hydraulic machines being in fluid communication with the first hydraulic machine (3h₁) of the first electrohydraulic drive device (3₁) for power transfer.

7. Electrohydraulic drive apparatus (10) according to one of the preceding claims, **characterized by** second electrohydraulic drive device (3₂), comprising
- a second electric machine (3e₂) and
- a second hydraulic machine (3h₂), which is in drive-connected with the second electric machine (3e₂) for power transfer and which is in fluid communication for power transfer with at least one hydraulic machine (2a) arranged on the electrohydraulically driveable axle (A₂) .

8. Electrohydraulic drive apparatus (10) according to claim 7, **characterized in that** two hydraulic machines (2a, 2b) are arranged on the electrohydraulically driveable axle (A₂), wherein
a) one of the two hydraulic machines (2a, 2b) is in fluid communication with the first hydraulic machine (3h₁) of the first electrohydraulic drive device (3₁) for power transfer; and
b) the other of the two hydraulic machines (2a, 2b) is in fluid communication with the second hydraulic machine (3h₂) of the second electrohydraulic drive device (3₂) for power transfer.

9. Electrohydraulic drive apparatus (10) according to one of the preceding claims, **characterized in that** precisely two hydraulic machines (2a, 2b) are arranged on the electrohydraulically driveable axle (A₂) and
a) can be operated independently of one another; and/or
b) are arranged on different wheel-side end regions (5a, 5b) of the electrohydraulically driveable axle (A₂); and/or
c) are designed as hydraulic wheel hub machines.

10. Electrohydraulic drive apparatus (10) according to one of the preceding claims, **characterized in that** two electric machines (1a, 1b) are arranged on the purely electrically driveable axle (A₁) and
a) are arranged in a central region of the purely electrically driveable axle (A₁); and/or
b) are arranged inside an axle housing (a₁) of the purely electrically driveable axle (A₁); and/or
c) are each arranged on different wheel-side end regions of the purely electrically driveable axle (A₁); and/or
d) are designed as electric wheel hub machines.

11. Electrohydraulic drive apparatus (10) according to one of the preceding claims, **characterized by** a further purely electrically driveable axle (A₃) on which at least one electric machine (1c) is arranged.

12. Electrohydraulic drive apparatus (10) according to Claim 10, **characterized in that** the two purely electrically driveable axles (A₁, A₃) are designed as a twin-axle assembly (7).

13. Electrohydraulic drive apparatus (10) according to one of the preceding claims, **characterized by** a control device (8) which is configured
a) to operate the electrohydraulic drive apparatus (10) in a first operating mode for increasing the drive power, in which first operating mode both the purely electrically driveable axle (A₁) and the electrohydraulically driveable axle (A₂) are driven; and/or
b) to operate the electrohydraulic drive apparatus (10) in a second operating mode for recuperative braking operation, in which second operating mode the at least one electric machine (1a) of the purely electrically driveable axle (A₁) is operated as a generator and/or at least one hydraulic machine (2a) of the electrohydraulically driveable axle (A₂) is operated as a hydraulic pump.

14. Electrohydraulic drive apparatus (10) according to Claim 13, **characterized in that**
a) at least two electric machines (1a, 1b) are arranged on the purely electrically driveable axle (A₁) and/or at least two hydraulic machines (2a, 2b) are arranged on the electrohydraulically driveable axle (A₂); and
b) the control device (8) is designed to operate the electrohydraulic drive apparatus (10) in a third operating mode for drive torque distribution, in which third operating mode two of the electric machines (1a, 1b) and/or two of the hydraulic machines (2a, 2b) provide different drive torques.

15. Motor vehicle (20), preferably utility vehicle such as a heavy goods vehicle or bus for example, comprising an electrohydraulic drive apparatus (10) according to one of the preceding claims.

## Revendications

1. Dispositif d'entraînement électrohydraulique (10) pour un véhicule automobile (20), de préférence un véhicule utilitaire, le dispositif d'entraînement électrohydraulique (10) étant réalisé sans moteur à combustion interne, comprenant
a) un essieu à entraînement purement électrique (A₁) sur lequel est disposée au moins une machine électrique (1a) ;
b) un essieu à entraînement électrohydraulique (A₂) sur lequel est disposée au moins une machine hydraulique (2a) ; et
c) un premier dispositif d'entraînement électrohydraulique (3₁), comprenant
- une première machine électrique (3e₁), et
- une première machine hydraulique (3h₁) qui est en liaison d'entraînement avec la première machine électrique (3e₁) pour la transmission de puissance et qui est en communication fluidique avec au moins une machine hydraulique (2a) disposée sur l'essieu à entraînement hydraulique (A₂) pour la transmission de puissance ;
**caractérisé en ce que** l'essieu à entraînement purement électrique (A₁) est un essieu rigide et/ou l'essieu à entraînement électrohydraulique (A₂) est un essieu rigide.

2. Dispositif d'entraînement électrohydraulique (10) selon la revendication 1, **caractérisé en ce que** la première machine électrique (3e₁) et la première machine hydraulique (3h₁) du premier dispositif d'entraînement électrohydraulique (3₁)
a) forment une unité constructive ; et/ou
b) sont reliées ensemble ; et/ou
c) sont adjacentes ou disposées côte à côte ; et/ou
d) sont entourées d'un carter commun.

3. Dispositif d'entraînement électrohydraulique (10) selon l'une quelconque des revendications précédentes, **caractérisé en ce que** la première machine électrique (3e₁) du premier dispositif d'entraînement électrohydraulique (3₁)
a) n'est pas disposée sur l'essieu à entraînement purement électrique (A₁) ou sur l'essieu à entraînement électrohydraulique (A₂) ; et/ou
b) n'est pas ou ne peut pas être reliée en entraînement à l'essieu à entraînement purement électrique (A₁) ; et/ou
c) est en liaison d'entraînement exclusivement avec la première machine hydraulique (3h₁) pour la transmission de puissance.

4. Dispositif d'entraînement électrohydraulique (10) selon l'une quelconque des revendications précédentes, **caractérisé en ce que** l'essieu à entraînement électrohydraulique (A₂) est un essieu directeur.

5. Dispositif d'entraînement électrohydraulique (10) selon l'une quelconque des revendications précédentes, **caractérisé en ce que** le dispositif d'entraînement électrohydraulique (10)
a) comprend un accumulateur d'énergie électrique (4) qui est conçu pour alimenter en énergie électrique ladite au moins une première machine électrique (1a) et ladite au moins une machine électrique (1a) disposée sur l'essieu à entraînement purement électrique (A₁) ; et/ou
b) est à entraînement purement électrique.

6. Dispositif d'entraînement électrohydraulique (10) selon l'une quelconque des revendications précédentes, **caractérisé en ce que** sur l'essieu à entraînement électrohydraulique (A₂), deux machines hydrauliques (2a, 2b) sont disposées qui sont toutes les deux en communication fluidique avec la première machine hydraulique (3h₁) du premier dispositif d'entraînement électrohydraulique (3₁) pour la transmission de puissance.

7. Dispositif d'entraînement électrohydraulique (10) selon l'une quelconque des revendications précédentes , **caractérisé par** un deuxième dispositif de commande électrohydraulique (3₂), comprenant
- une deuxième machine électrique (3e₂) et
- une deuxième machine hydraulique (3h₂), qui est en connexion de transmission de puissance avec la deuxième machine électrique (3e₂) et qui est en communication fluidique pour la transmission de puissance avec au moins une machine hydraulique (2a) disposée sur l'essieu entraînable électrohydrauliquement (A₂).

8. Dispositif d'entraînement électrohydraulique (10) selon revendication 7, **caractérisé en ce que** sur l'essieu à entraînement électrohydraulique (A₂), deux machines hydrauliques (2a, 2b) sont disposées, dans lequel
a) l'une des deux machines hydrauliques (2a, 2b) est en communication fluidique avec la première machine hydraulique (3h₁) du premier dispositif d'entraînement électrohydraulique (3₁) pour la transmission de puissance ; et
b) l'autre des deux machines hydrauliques (2a, 2b) est en communication fluidique avec la deuxième machine hydraulique (3h₂) du deuxième dispositif d'entraînement électrohydraulique (3₂) pour la transmission de puissance.

9. Dispositif d'entraînement électrohydraulique (10) selon l'une quelconque des revendications précédentes, **caractérisé en ce que** sur l'essieu à entraînement électrohydraulique (A₂), exactement deux machines hydrauliques (2a, 2b) sont disposées qui
a) peuvent fonctionner indépendamment l'une de l'autre ; et/ou
b) sont disposées dans différentes zones d'extrémité côté roue (5a, 5b) de l'essieu à entraînement électrohydraulique (A₂) ; et/ou
c) sont réalisées sous forme de machines hydrauliques sur moyeu de roue.

10. Dispositif d'entraînement électrohydraulique (10) selon l'une quelconque des revendications précédentes, **caractérisé en ce que** sur l'essieu à entraînement purement électrique (A₁), deux machines électriques (1a, 1b) sont disposées qui
a) sont disposées dans une zone centrale de l'essieu à entraînement purement électrique (A₁) ; et/ou
b) sont disposées à l'intérieur d'un carter d'essieu (a₁) de l'essieu à entraînement purement électrique (A₁) ; et/ou
c) sont disposées respectivement dans différentes zones d'extrémité côté roue de l'essieu à entraînement purement électrique (A₁) ; et/ou
d) sont réalisées sous forme de machines hydrauliques sur moyeu de roue.

11. Dispositif d'entraînement électrohydraulique (10) selon l'une quelconque des revendications précédentes, **caractérisé par** un autre essieu à entraînement purement électrique (A₃) sur lequel est disposée au moins une machine électrique (1c).

12. Dispositif d'entraînement électrohydraulique (10) selon la revendication 10, **caractérisé en ce que** les deux essieux à entraînement purement électrique (A₁, A₃) sont réalisés sous forme de groupe d'essieux tandem (7).

13. Dispositif d'entraînement électrohydraulique (10) selon l'une quelconque des revendications précédentes, **caractérisé par** un dispositif de commande (8) qui est réalisé pour faire fonctionner le dispositif d'entraînement électrohydraulique (10)
a) dans un premier mode de fonctionnement pour augmenter la performance de conduite, dans lequel à la fois l'essieu à entraînement purement électrique (A₁) et l'essieu à entraînement électrohydraulique (A₂) sont entraînés ; et/ou
b) dans un deuxième mode de fonctionnement pour un fonctionnement de freinage à récupération, dans lequel au moins une machine électrique (1a) de l'essieu à entraînement purement électrique (A₁) fonctionne en mode générateur et/ou au moins une machine hydraulique (2a) de l'essieu à entraînement électrohydraulique (A₂) fonctionne en mode pompe hydraulique.

14. Dispositif d'entraînement électrohydraulique (10) selon la revendication 13, **caractérisé en ce que**
a) sur l'essieu à entraînement purement électrique (A₁) au moins deux machines électriques (1a, 1b) sont disposées, et/ou sur l'essieu à entraînement électrohydraulique (A₂) au moins deux machines hydrauliques (2a, 2b) sont disposées ; et
b) le dispositif de commande (8) est réalisé pour faire fonctionner le dispositif d'entraînement électrohydraulique (10) dans un troisième mode de fonctionnement pour la répartition du couple d'entraînement **en ce que** deux des machines électriques (1a, 1b) et/ou deux des machines hydrauliques (2a, 2b) fournissent différents couples d'entraînement.

15. Véhicule automobile (20), de préférence véhicule utilitaire, comme par exemple un poids lourd ou un bus, comprenant un dispositif d'entraînement électrohydraulique (10) selon l'une quelconque des revendications précédentes.
